# EUROPÄISCHE PATENTSCHRIFT

(11) **EP 0 724 939 B1**
(45) Veröffentlichungstag und Bekanntmachung des Hinweises auf die Patenterteilung: **16.06.1999**
(21) Anmeldenummer: 96101558.3
(22) Anmeldetag: 03.02.1996
(51) Int. Cl.: B27M 1/08

(54) **Abbundanlage zum Bearbeiten von Werkstücken, insbesondere Brettern, Kanthölzern und dergleichen**
Trimming-machine for working workpieces, in particular boards, squared timber and the like
Machine de taillage pour l'usinage des pièces à usiner, particulièrement des planches, du bois équarri ou similaires

(30) Priorität: 04.02.1995 DE 19503731
(43) Veröffentlichungstag der Anmeldung: 07.08.1996
(73) Patentinhaber: Hundegger, Hans, D-87749 Hawangen (DE)
(72) Erfinder: Hundegger, Hans, D-87749 Hawangen (DE)
(74) Vertreter: Pfister, Helmut, Dipl.-Ing.

(56) Entgegenhaltungen:
- EP-A- 0 319 032
- EP-A- 0 506 621
- DE-A- 3 308 990
- DE-A- 3 526 371
- FR-A- 2 689 807
- US-A- 4 148 344
- US-A- 4 185 672
- US-A- 5 358 018

## Beschreibung

Die Erfindung betrifft eine Abbundanlage zum Bearbeiten von Werkstücken, insbesondere Brettern, Kanthölzern und dergleichen, wobei die Abbundanlage mindestens eine Bearbeitungsmaschine aufweist, und vor der Bearbeitung ein Einlaufbereich mit einer Fördervorrichtung für das Werkstück vorgesehen ist und eine Steuerung die Bearbeitung des Werkstückes überwacht, wobei in dem Einlaufbereich mindestens eine Meßvorrichtung für dar Werkstück vorgesehen ist, die eine Dimension des Werkstückes bestimmt.

Eine derartige Abbundanlage ist aus FR-A 26 89 807 bekanntgeworden. Dadurch wird es möglich, bei der Verarbeitung von Balken unterschiedlicher Länge eine zeitaufwendige Tätigkeit von Hand zu vermeiden.

Der Erfindung liegt die Aufgabe zugrunde die bekannte Abbundanlage derart zu verbessern, daß ein Optimierungsprogramm einsetzbar ist und der Anfall unverwertbarer Abschnitte verringert wird.

Zur Lösung dieser Aufgabe werden die Merkmale gemäß dem kennzeichnenden Teil des Patentanspruches 1 vorgeschlagen.

Durch eine solche Ausgestaltung wird erreicht, daß zwischen dem Vermessen der noch unbearbeiteten Werkstücke und der ersten Bearbeitungsmaschine mehrere Werkstücke vorgehalten werden. Die Daten dieser Werkstücke, ebenso wie ihre Reihenfolge werden von der Steuerung, z.B. einem Mikroprozessor gesteuerten Rechner gespeichert. Aufgrund dieser vorgehaltenen Informationen ist nun die Steuerung in der Lage, für jedes einzelne Werkstück ein optimales Bearbeitungsprogramm auszuwählen, un den Verschnitt möglichst gering zu halten.

Die Fahrtrichtung der Zuförderbahn und die Förderrichtung der Lagerbahn können beispielsweise auch einem rechten Winkel zueinander angeordnet sein. Die Meßvorrichtung, die im Bereich der Lagerbahn angeordnet ist, behindert die Zuförderung des Werkstückes auf der Förderbahn zu der bearbeitenden Maschine nicht.

In einer bevorzugten Ausführung der Erfindung wird vorgeschlagen, daß das Werkstück an einem Stop-Anschlag anliegt, und die Meßvorrichtung die Länge des Werkstückes bezüglich des Stop-Anschlages bestimmt. Das zu bearbeitende Werkstück wird zum Beispiel in seiner Längsrichtung gegen den Stop-Anschlag gefördert. Dieser Stop-Anschlag ist beispielsweise als schwenkbare Klappe oder dergleichen ausgebildet. Die Lage dieses Anschlages und die der Meßvorrichtung sind genau bestimmt. Die Meßvorrichtung bestimmt nun zum Beispiel den Abstand einer bestimmten Fläche, beispielsweise der Stirnfläche des Balkens zu der Meßvorrichtung. Daraus wird dann zum Beispiel die Länge des Werkstückes bestimmt.

Es ist auch vorteilhaft als Meßvorrichtung zwei Distanzmeßgeräte vorzusehen, und die beiden Distanzmeßgeräte die Länge des Werkstückes bestimmen. Die beiden Distanzmeßgeräte werden beispielsweise auf einer Achse angeordnet und sind gegeneinander gerichtet. Das Werkstück befindet sich zum Beispiel zwischen den beiden Distanzmeßgeräten. Das Werkstück wird quer zu seiner Längsachse an eine Anschlagkante gefördert, damit die genaue Lage des Werkstückes bestimmt ist. Bei dieser Ausgestaltung kann auf einen Stop-Anschlag verzichtet werden. Die Anschlagkante ist zum Beispiel parallel zur Achse ausgerichtet und ist zum Beispiel aus einer Mehrzahl von Klappanschlägen gebildet.

Die Erfindung sieht weiterhin vor, daß das Werkstück an einem Längenanschlag anliegt, und die Meßvorrichtung den Abstand zwischen der Stirnfläche des Werkstückes und der Meßvorrichtung bestimmt. Durch eine solche Anordnung wird mit einfachen Mitteln die Längendimension des Werkstückes bestimmt. Der Längenanschlag bildet eine Anschlagkante für das Werkstück, damit das Werkstück für die Messung fixiert und geführt ist. Dieser Längenanschlag kann z.B. durch in die Förderrichtung auf der Lagerbahn oder der Förderbahn schwenkbaren Klappanschlägen bestehen. Die Werkstücke werden hierbei z.B. quer zu ihrer Längsachse gefördert.

Es ist vorteilhaft, die Meßvorrichtung als Lasermeßeinrichtung auszubilden. Mit dieser Lasermeßeinrichtung kann eine berührungslose Meßvorrichtung mit hoher Genauigkeit realisiert werden. Die Meßvorrichtung kann z.B. auch als Ultraschallmeßeinrichtung ausgebildet werden.

Neben z.B. der Laufzeitmessung des Laserlichtes ist auch die Laufzeitmessung von Ultraschall einsetzbar, um dadurch die Länge des Werkstückes zu ermitteln. Es ist aber auch möglich, die Meßvorrichtung durch eine Lichtschrankenanordnung zu realisieren.

Desweiteren ist es günstig, wenn die Meßvorrichtung zwischen der Lagerbahn und der Förderbahn vorgesehen ist und ein Werkstück nach der Meßvorrichtung und vor der Bearbeitung durch die Bearbeitungsmaschine vorgehalten wird. Z.B. wird auf der Lagerbahn die zu bearbeitenden Werkstücke z.B. durch einen Gabelstapler aufgelegt. Es ist von Vorteil, wenn die Meßvorrichtung zwischen der Lagerbahn und der Förderbahn vorgesehen ist. Hierbei ist vorgesehen, daß nach der Meßvorrichtung ein Werkstück gepuffert wird, um eine Unterbrechung der Bearbeitung auf der Abbundanlage zu vermeiden.

In einer bevorzugten Ausgestaltung der Erfindung wird vorgesehen, daß die Fördervorrichtung das Werkstück gegen den Längenanschlag fördert, bis das Werkstück parallel zum Längenanschlag ausgerichtet ist. Es ist z.B. vorgesehen, daß das Werkstück quer zu seiner Längserstreckung durch die Fördervorrichtung gefördert wird. Die Bestimmung der Dimension durch die Meßvorrichtung erfolgt z.B. an dem Längenanschlag. Für eine fehlerfreie Vermessung des Werkstückes liegt das Werkstück parallel an dem Längenanschlag an. Wird nun z.B. das Werkstück schräg auf der Lagerbahn aufgesetzt, so wird durch die erfindungsgemäße Ausgestaltung erreicht, daß die Fördervorrichtung nicht dann anhält, wenn eine vorstehende Kante an dem Längenanschlag anliegt, sondern die Fördervorrichtung solange weiterläuft, bis das Werkstück parallel ausgerichtet ist. Insbesondere wenn der Längenanschlag am Ende der Lagerbahn, im Bereich der Förderbahn angeordnet ist, wird ein Vorteil erreicht. Es erfolgt nicht nur eine fehlerfreie Vermessung des Werkstückes, sondern das Werkstück wird auch gleichzeitig bezüglich nachfolgenden Bearbeitungsmaschinen richtig ausgerichtet. Dadurch kann ein Arbeitsschritt eingespart werden.

Desweiteren ist es von Vorteil, wenn die Meßvorrichtung für die Bestimmung einer Dimension des Querschnitts des Werkstückes einen Meßgreifer aufweist, wobei der Meßgreifer das Werkstück festhält und die Dimension bestimmt. Hierbei kann z.B. die Höhe des Werkstückes bestimmt werden. Der Meßgreifer weist hierbei z.B. einen Schwenkmechanismus auf, durch den der Meßgreifer in den Förderweg des Werkstückes geschwenkt werden kann, wenn das Werkstück in einer definierten Position liegt, z.B. wenn es an einem Anschlag anliegt. Der Meßgreifer ist. z.B. mit parallel angeordneten Backen ausgestattet, die einen genauen Antrieb aufweisen und die Stellung der beiden Backen jederzeit exakt bestimmbar ist. Die Dimension des Querschnittes wird hierbei z.B. durch die Differenzenbildung der beiden Backenpositionen ermittelt, wenn der Meßgreifer das Werkstück festhält.

Ein weiterer Vorteil wird erzielt, wenn die Fördervorrichtung umgesteuert wird, während der Meßgreifer das Werkstück festhält. Die Fördervorrichtung weist z.B. eine Antriebskette auf, die unter dem Werkstück durchgleitet wenn das Werkstück an einem Anschlag anliegt. Oftmals besteht das Problem, daß zwei Werkstücke aneinander anliegen wodurch die Vermessung des Werkstückes erschwert wird. Diese beiden Werkstücke müssen getrennt werden. Der erfindungsgemäße Vorschlag schlägt vor, daß durch ein Umsteuern der Fördervorrichtung die Fördervorrichtung rückwärts fährt, wobei gleichzeitig der Meßgreifer das Werkstück festhält. Die Kette gleitet unter dem festgehaltenen Werkstück durch und bewegt alle nachfolgenden Werkstücke zurück und trennt somit die beiden anfänglich aneinanderliegenden Werkstücke.

Desweiteren wird vorgeschlagen, daß als Meßvorrichtung eine Sensoranordnung im Einlaufbereich vorgesehen ist, die im Zusammenwirken mit der Fördervorrichtung eine Dimension des Werkstückes bestimmt. Bei einer solchen Anordnung wird z.B. die Breite des Werkstückes gemessen. Als Sensor wird z.B. eine Lichtschranke verwendet, die den Anfang und das Ende des Werkstückes erkennt. Die Fördervorrichtung weist z.B. einen genau auslesbaren Antrieb auf mit dem es möglich ist, durch das Anfang- und Endsignal des Sensors die Dimension des Werkstückes zu bestimmen.

In der Zeichnung ist die Erfindung schematisch dargestellt. Es zeigen:
- Fig. 1: eine Draufsicht auf eine erfindungsgemäße Abbundanlage,
- Fig. 2: in einem vergrößerten Maßstab eine Seitenansicht entsprechend dem Pfeil II in Fig. 1,
- Fig. 3: in einer Seitenansicht ein Detail der erfindungsgemäßen Abbundanlage,
- Fig. 4: in einer Seitenansicht ein weiteres Detail im Einlaufbereich der erfindungsgemäßen Abbundanlage.

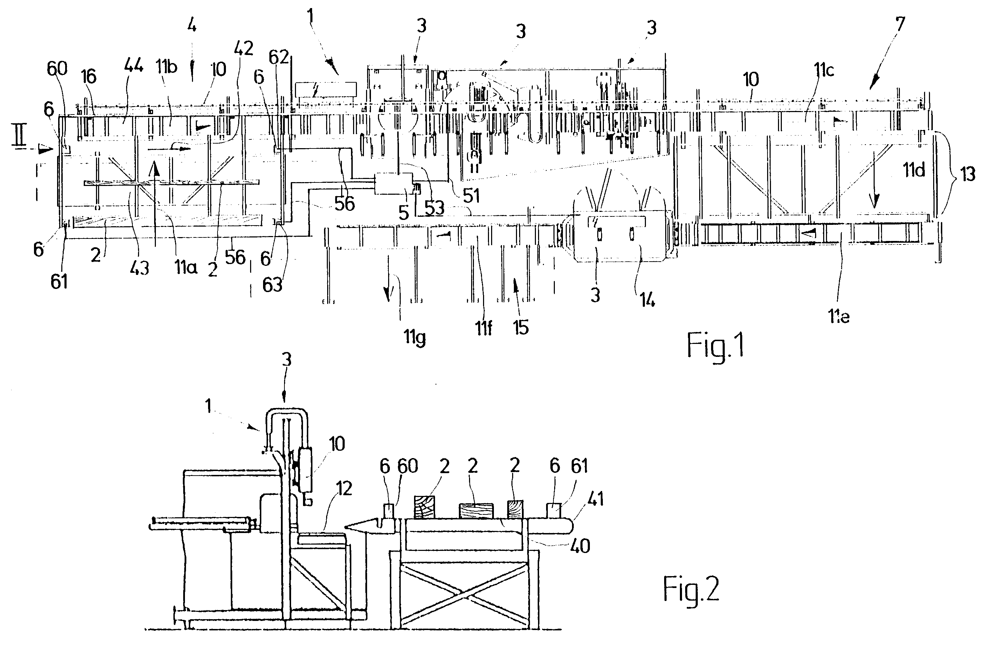

Die Abbundanlage 1 (nach Fig. 1) dient zum Bearbeiten von Werkstücken 2 wie Brettern, Kanthölzern und dergleichen. In einer solchen Abbundanlage werden mit den Bearbeitungsmaschinen 3 unterschiedliche Bearbeitungsschritte ausgeführt. Als Bearbeitungsmaschinen 3 sind z.B. Holzbearbeitungsmaschinen, insbesondere Kappsägen, Fräser, Stirnfräser, Bohrmaschinen oder dergleichen vorgesehen. Diese Bearbeitungsmaschinen 3 sind zwischen dem Einlaufbereich 4 und dem Auslaufbereich 7 vorgesehen. Die gesamte Länge der Abbundanlage 1, also vom Einlaufbereich 4 bis zum Auslaufbereich 7 beträgt z.B. über zwanzig Meter. Dadurch ist es möglich, entsprechend große Holzbalken usw. zu bearbeiten.

Der Förderweg der aufgelegten Werkstücke 2 ist mit den Pfeilen 11 a bis 11 g gekennzeichnet. Der Einlaufbereich 4 hält die zu bearbeitenden Werkstücke 2 vor. Der Einlaufbereich 4 besteht aus einer Lagerbahn 43, bestehend z.B. aus einem Tisch 40, und einer Förderbahn 44, die beispielsweise das Transportsystem 10 aufweist. In Fig. 2 ist gezeigt, daß die Werkstücke 2 auf einem Tisch 40 aufliegen, der z.B. eine Fördervorrichtung, insbesondere einen Ketten- oder Rollenantrieb aufweist. Diese Fördervorrichtung fördert die Werkstücke 2 quer zu ihrer Längsausdehnung (gemäß dem Pfeil 11 a) zum Transportsystem 10 der Abbundanlage 1. Dieses Transportsystem 10 kann beispielsweise ein über die Auflagebahn 12 geführter Transportschlitten 10 sein. Mit Hilfe dieses hochgenauen Transportschlittens 10 ist es möglich, das Werkstück 2 präzise an die Bearbeitungsstation 3 heranzuführen. Die Auflagefläche des Tisches 40 liegt hierbei etwas höher, wie der Auflagetisch 12 der Abbundanlage 1.

Nachdem die Werkstücke gemäß dem Pfeil 11 a im Einlaufbereich 4 an das Transportmittel 10 der Abbundanlage 1 herangeführt worden sind, werden diese entlang den Pfeilen 11 b und 11 c durch die Bearbeitungsmaschinen 3 vom Einlaufbereich 4 in den Auslaufbereich 7 gefördert und entsprechend bearbeitet. Nach der Bearbeitung wird das Werkstück durch den Querumsetzetisch 13 auf eine der Abbundanlage 1 nachgeschalteten, weiteren Bearbeitungsstation 14 zugefördert. Dies kann z.B. eine Vierseitenhobelmaschine sein. Die Umlenkbewegung auf dem Umlegetisch 13 ist mit 11 d gekennzeichnet, die Längsverschiebung durch die Bearbeitungsmaschine 14 ist mit 11 e bezeichnet. Nach der Bearbeitungsmaschine 14 wird das fertig bearbeitete Werkstück 2 entlang dem Pfeil 11 f herausgefördert und dann im rechten Winkel zu der Pfeilrichtung 11 f, gemäß dem Pfeil 11 g in einem Materiallager 15 abgelegt.

Im Einlaufbereich 4, insbesondere auf dem Tisch 40, liegen nun eine Vielzahl von verschiedenen Werkstücken 2 auf. Diese Werkstücke 2 können, wie angedeutet, durchaus unterschiedliche Längen aufweisen. Die Steuerung 5 überwacht für die zu bearbeitenden Werkstücke die gerade auszuführenden Bearbeitungsschritte. Hierzu weist die Abbundanlage 1 eine Steuerung 5 auf, die durch eine Vielzahl von Steuerleitungen 51, 53,56 mit den Bearbeitungsmaschinen 3, dem Transportmittel 10, der Meßvorrichtung 6 und anderen Elementen verbunden ist.

Damit die Anlage die zugeförderten Werkstücke optimal verarbeitet, weist die Anlage 1 eine Meßvorrichtung 6 auf, die im Einlaufbereich 4 vorgesehen ist und durch die Steuerungsleitung 56 mit der Steuerung 5 verbunden ist. Die Meßvorrichtung 6 bestimmt hierbei die Länge, deren Dicke oder andere Dimensionen des Werkstückes. Hierzu ist z.B. auch vorgesehen, daß im Einlaufbereich 4 mehrere Meßvorrichtungen 6,60,61 angeordnet sind. Die Meßvorrichtung 60 ist z.B. nahe an der Förderbahn 10 der Abbundlage 1 vorgesehen. Durch eine solche Anordnung wird der Steuerung 5 der Abbundanlage 1 mitgeteilt, welche Dimensionen das nächste, zu bearbeitende Werkstück 2 aufweist.

In einer anderen Ausführung der Erfindung ist vorgesehen, die Meßvorrichtung 61 an der Auflagekante 41 des Tisches 40 vorzusehen, die von dem Transportmittel 10 der Abbundanlage 1 weit entfernt ist. Durch eine solche Anordnung wird erreicht, daß bereits vermessene Werkstücke 2 noch auf dem Tisch 40 aufliegen, die Daten von der Steuerung 5 gespeichert sind und die Steuerung aufgrund der vorgehaltenen Werkstücke bestimmt, welche verschiedenen Elemente aus den vorgehaltenen Werkstücken 2 gefertigt werden sollen. Dadurch wird eine optimale Ausnutzung der angebotenen Werkstücke erreicht, deren Dimensionen durchaus unterschiedlich sein können.

Es ist hierbei vorgesehen, sowohl eine Anordnung der Meßvorrichtung 60 nahe an dem Transportmittel 10 oder von diesem weit entfernt (61) zu verwenden werden, wie auch, daß beide Meßgeräte 60,61 gemeinsam in einer Anlage verwirklicht werden. Dadurch kann z.B. eine Nachmessung bzw. eine Korrektur der ermittelten Daten erreicht werden.

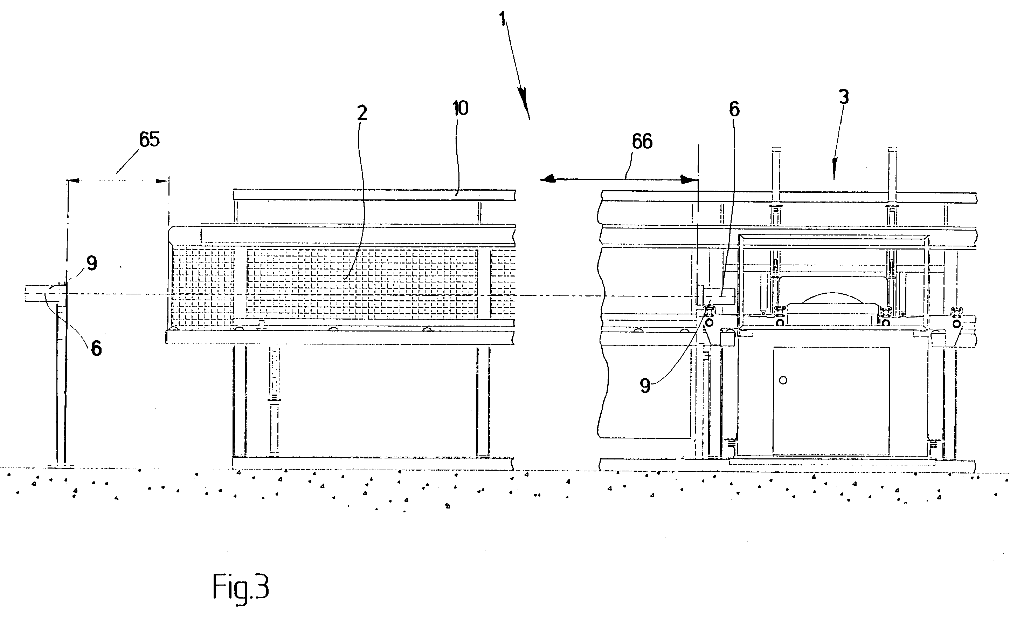

Das aufgelegte Werkstück 2 wird hierbei auf dem Tisch 40 gegen Anschläge geführt, die von der Meßvorrichtung 6 einen definierten Abstand aufweisen. Dieser Anschlag ist beispielsweise als Referenzpunkt 62 gekennzeichnet. Hierzu weist z.B. der Tisch 40 einen Längsverschieber 42 auf, um das aufgelegte Werkstück gegen diesen Anschlag 62 zu fördern. Der Anschlag 62 kann z.B. mit einem Endschalter ausgestattet sein, der den Längsschieber 42 stoppt, wenn das Werkstück anliegt. Hierzu ist der Anschlag beispielsweise auch mit der Steuerung verbunden. Liegt das Werkstück 2 an dem Anschlag 62 an, ermittelt das Distanzmeßgerät 60 den Abstand 65 zu einer Fläche, beispielsweise der Stirnfläche des Werkstückes 2. Diese ist z.B. in Fig. 3 dargestellt. Die Steuerung 5 ermittelt nun aus der Entfernung 65 sowie der Lage des Anschlages 62, also den Abstand des Anschlages 62 von der Meßvorrichtung 6, die Länge des Werkstückes 2. Es ist auch möglich, die Meßvorrichtung im Zusammenwirken mit dem Transportmittel 10 zu verwirklichen. Die Längsverschiebung entsprechend dem Pfeil 42 kann hierbei z.B. durch das Transportmittel 10 erfolgen. Auch der Bereich der Abbundanlage 1, an dem die Werkstücke 2 entsprechend dem Pfeil 11 b z.B. von dem Transportmittel 10 längsverschoben werden, zählt zu dem Einlaufbereich 4.

Neben der Meßvorrichtung mit einem Distanzmeßgerät 6 und einem Anschlag 62 ist vorgesehen, zwei miteinander zusammenwirkende Distanzmeßgeräte 61,63 einzusetzen (siehe Fig. 1). Es wird hier z.B. eine Lasermeßeinrichtung 9 verwendet. Hierbei liegt beispielsweise das Werkstück 2 an einem Längsanschlag 16 parallel an und die beiden Distanzmeßgeräte 6 (in Fig. 3) bestimmen die jeweiligen Abstände 65 und 66 von dem Distanzmeßgerät 6 zu den jeweiligen Stirnflächen des Werkstückes 2. Aus diesen Daten und dem Abstand zwischen den beiden Distanzmeßgeräten 6 ermittelt nun die Steuerung 5 z.B. die wirkliche Länge des Werkstückes 2.

Es versteht sich von selbst, daß der Längsanschlag 16 nicht nur im Bereich des Transportmittels 10 vorgesehen ist, sondern auch im Bereich der Auflagekante 41 des Tisches 40. Ebenso ist auch eine Anordnung zweier Distanzmeßgeräte 61,63 im Bereich der Auflagekante 41 anwendbar, wie auch im Bereich des Transportsystems 10. Auch das Transportsystem 10 zählt zu der Fördervorrichtung im Einlaufbereich.

Die Steuerung 5 ermittelt nun aus den über die Steuerungsleitung 56 übermittelten Daten die Länge des Werkstückes 2. Gleichzeitig speichert die Steuerung auch die Position des Werkstückes in der Reihe der zu bearbeitenden Werkstücke. Dadurch ist es der Steuerung möglich, den unterschiedlich langen Werkstücken 2 eine bestimmte Folge von Bearbeitungsschritten zuzuweisen, wobei dies z.B. derart optimiert ist, daß möglichst wenig Ausschuß entsteht. Hierzu weist die Steuerung 5 die Bearbeitungsmaschinen 3 über die Steuerleitungen 53 an, die entsprechenden Bearbeitungsschritte nach dem errechneten oder eingegebenen Konstruktionsplan an den angelieferten Werkstücken 2 auszuführen.

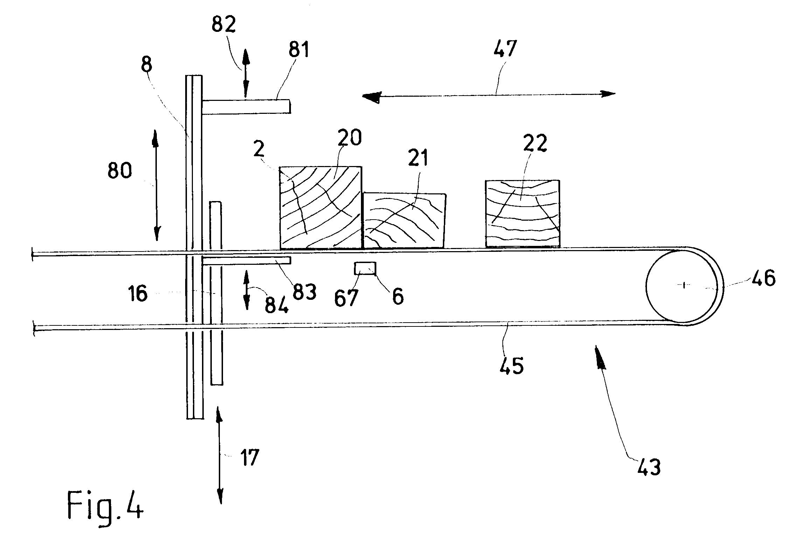

In Fig. 4 sind weitere Meßvorrichtungen 6 gezeigt.

Die zu bearbeitenden Werkstücke 2,20,21,22 liegen auf der Fördervorrichtung 45 auf. Diese Fördervorrichtung 45 besteht z.B. aus einer Kettenbahn, wobei mehrere Ketten parallel in einem gewissen Abstand voneinander vorgesehen sind und die Werkstücke unterstützen. Die Kettenbahn 45 kann hierbei unter den Werkstücken 2,20,21,22 hindurchgleiten, wenn diese Werkstücke auf ein Hindernis, z.B. einen Anschlag oder dergleichen treffen und von diesem Hindernis festgehalten werden.

Für die Messung der Breite des Werkstückes 2 ist ein Sensor 67 vorgesehen. Dieser Sensor 67 erkennt z.B. den Anfang und das Ende des Werkstückes 2. Die Fördervorrichtung 45 weist einen Antrieb 46 auf. Die Vorschublänge des Antriebes 46 ist genau bestimmbar. Die Steuerung bestimmt nun z.B. aus der Vorschublänge während des Signales des Sensors 67 die Breite des Balkens 2.

Für die Bestimmung der Höhe des Balkens 2 ist ein Meßgreifer 8 vorgesehen. Dieser Meßgreifer 8 besteht z.B. aus zwei gegeneinander verschiebbare Teller oder Backen 81,83 wobei z.B. der Teller 81 das Werkstück von oben ergreift, und der Teller 83 das Werkstück von unten ergreift. Wenn das Werkstück 2 im Bereich des Meßgreifers 8 einfährt, ergreift der Meßgreifer 8 das Werkstück 2 indem die beiden Backen 81,83 gegeneinander fahren. Die Beweglichkeit der Backen 81,83 ist durch entsprechende Pfeile 82,84 angedeutet. Die Antriebe der beiden Backen 81,83 weist hierbei eine Längenmeßvorrichtung auf, so daß es dann leicht möglich ist, die Höhe des Werkstückes 2 aus den erhaltenen Längen bzw. Daten zu ermitteln. Der Meßgreifer 8 sitzt z.B. in den Zwischenräumen zwischen den Kettenantrieben 45. Der Meßgreifer 8 kann in oder aus der Förderrichtung 47 der Werkstücke 2 geschwenkt oder linear wegbewegt werden. Dies ist durch den Doppelpfeil 80 angedeutet.

Der Meßgreifer 8 erfüllt noch eine weitere Funktion. In Fig. 4 ist angedeutet, daß die Balken 20,21 aneinander anliegen. Dadurch können die Meßdaten verfälscht werden. Z.B. kann die Breite mit Hilfe des Sensors 67 nicht einwandfrei festgestellt werden. Es muß also eine Trennung der beiden Balken 20,21 erfolen. Der Meßgreifer 8 greift hierbei zunächst das Werkstück 20, nachdem dieses in den Meßgreifer 8 eingefahren ist. Im Bereich des Meßgreifers 8 oder des Längenanschlages 16 ist z.B. ein Endschalter vorgesehen, um das eingefahrene Werkstück 20 zu erkennen. Nun erfolgt eine Umsteuerung der Fördervorrichtung 45 wobei sich nun die aufgelegten Werkstücke 21,22 nach rechts (Pfeil 47) bewegen und somit der Balken 21 von dem Werkstück 20 getrennt wird. Es kann auch nun vorgesehen werden, daß auch der Balken 20 nach rechts transportiert wird um diesen nochmals mit Hilfe des Sensors 67, wie oben beschrieben, zu vermessen.

Es ist zu beachten, daß für eine fehlerfreie Vermessung des Balkens 2 der Balken 2 parallel ausgerichtet wird. Für eine parallele Ausrichtung ist der Längenanschlag 16 vorgesehen. Auch hier ist eine Mehrzahl von Längenanschlägen 16 in den Zwischenräumen zwischen den Kettensträngen der Fördervorrichtung 45 vorgesehen. Der Anschlag 16 kann bei Bedarf in den Förderweg geschwenkt oder bewegt werden. Er ist hierzu z.B. von unten nach oben und umgekehrt verschiebbar (Pfeil 17).

Hierbei ist vorgesehen, daß der Balken 20 parallel ausgerichtet wird, indem die Fördervorrichtung 45 nachläuft, auch wenn bereits ein gewisser Teil des Balkens 2 an dem Längenanschlag 16 anliegt. An dem Längenanschlag 16 können hierzu weitere Erkennungssensoren vorgesehen werden, die dann z.B. der Steuerung mitteilen, daß der Balken 2 über seine ganze Länge an dem Längenanschlag 16 anliegt. Z.B. werden zwei Sensoren vorgesehen, wobei der Abstand dieser beiden Sensoren mindestens der kürzesten Länge der verwendeten Balken 2 entspricht.

Auch hier ist es von Vorteil, daß das Fördermittel unter dem Balken durchgleitet. Erfolgt nun eine Berührung des nachfolgenden Balkens so können die aneinanderliegenden Balken wieder getrennt werden, wie oben beschrieben.

## Patentansprüche

1. Abbundanlage zum Bearbeiten von Werkstücken (2), insbesondere Kanthölzern und dergleichen, wobei die Abbundanlage mindestens eine Bearbeitungsmaschine (3) aufweist, und vor der Bearbeitung ein Einlaufbereich (4) mit einer Fördervorrichtung (10) für das Werkstück (2) vorgesehen ist und eine Steuerung (5) die Bearbeitung des Werkstückes überwacht, wobei in dem Einlaufbereich (4) mindestens eine Meßvorrichtung (6) für das Werkstück (2) vorgesehen ist, die eine Dimension des Werkstückes, bestimmt, **dadurch gekennzeichnet, daß** der Einlaufbereich (4) aus einer Zuförderbahn (44) und einer Lagerbahn (43) besteht, wobei die Förderbahn (44) das Werkstück (2) an die Bearbeitungsmaschine (3) fördert und die Lagerbahn (43) die Werkstücke (2) vorhält, wobei die Meßvorrichtung (6) am Anfang (41) der Lagerbahn (43) vorgesehen ist, und die Steuerung (5) die Information der vermessenen Werkstücke (2) speichert und aus diesen Informationen die Bearbeitungsschritte für die jeweiligen Werkstücke (2) auswählt.

2. Abbundanlage nach Anspruch 1, **dadurch gekennzeichnet,** **daß** das Werkstück (2) an einem Stop-Anschlag (62) anliegt, und die Meßvorrichtung (6) die Länge des Werkstückes (2) bezüglich des Stop-Anschlages (62) bestimmt.

3. Abbundanlage nach einem oder beiden der vorgehenden Ansprüche, **dadurch gekennzeichnet, daß** als Meßvorrichtung zwei Distanzmeßgeräte (61,63) vorgesehen sind und die beiden Distanzmeßgeräte (61,63) die Länge des Werkstückes (2) bestimmen.

4. Abbundanlagen nach einem oder mehreren der vorhergenden Ansprüche, **dadurch gekennzeichnet, daß** das Werkstück (2) an einem Längenanschlag (16) anliegt und die Meßvorrichtung (6) den Abstand zwischen der Stirnfläche des Werkstückes (2) und der Meßvorrichtung (6) bestimmt.

5. Abbundanlage nach einem oder mehreren der vorhergehenden Ansprüche, **dadurch gekennzeichnet, daß** die Meßvorrichtung (6) als Lasermeßeinrichtung (9) ausgebildet ist.

6. Abbundanlage nach einem oder mehreren der vorhergehenden Ansprüche, **dadurch gekennzeichnet, daß** die Meßvorrichtung (6) zwischen der Lagerbahn (43) und der Förderbahn (44) vorgesehen ist und ein Werkstück (2) nach der Meßvorrichtung (6) und vor der Bearbeitung durch die Bearbeitungsmaschine (3) vorgehalten wird.

7. Abbundanlage nach einem oder mehreren der vorhergehenden Ansprüche, **dadurch gekennzeichnet, daß** die Fördervorrichtung (45) das Werkstück (2) gegen den Längenanschlag (16) fördert, bis das Werkstück (2) parallel zum Längenanschlag (16) ausgerichtet ist.

8. Abbundanlage nach einem oder mehreren der vorhergehenden Ansprüche, **dadurch gekennzeichnet, daß** die Meßvorrichtung (6) für die Bestimmung einer Dimension des Querschnittes des Werkstückes (2) einen Meßgreifer (8) aufweist, wobei der Meßgreifer (8) das Werkstück (2) festhält und die Dimension bestimmt.

9. Abbundanlage nach einem oder mehreren der vorhergehenden Ansprüche, **dadurch gekennzeichnet, daß** die Fördervorrichtung (45) umgesteuert wird, während der Meßgreifer (8) das Werkstück (2) festhält.

10. Abbundanlage nach einem oder mehreren der vorhergehenden Ansprüche, **dadurch gekennzeichnet, daß** als Meßvorrichtung (6) eine Sensoranordnung (67) im Einlaufbereich (4) vorgesehen ist, die im Zusammenwirken mit der Fördervorrichtung (45) eine Dimension des Werkstückes (2) bestimmt.

## Claims

1. A trimming plant for processing workpieces (2), in particular squared timber or the like, said trimming plant having at least one processing machine (3), there being an approach unit (4) with a conveyor (10) for conveying the workpiece prior to processing and a control unit (5) for controlling the processing of the workpiece, said approach unit (4) comprising at least one measuring device (6) for the workpiece (2) to determine one dimension of the workpiece, **characterised in that** the approach unit (4) comprises a feeding path (44) and a supporting path (43), said feeding path (44) feeding the workpiece (2) to the processing machine (3) and said supporting path (43) supporting the workpieces (2), with the measuring device (6) being arranged at the front end (41) of the supporting path (43) and the control unit (5) storing the information obtained from measuring the workpieces (2), this information being used to select the processing steps for the respective workpieces (2).

2. A trimming plant according to claim 1, **characterised in that** the workpiece (2) rests against a stop (62) and the measuring device (6) determines the length of the workpiece (2) with respect to the stop (62).

3. A trimming plant according to one or both of the preceding claims, **characterised in that** there are two distance measuring devices (61, 63) to determine the length of the workpiece (2).

4. A trimming plant according to one or several of the preceding claims, **characterised in that** the workpiece (2) rests against a longitudinal stop (16) and the measuring device (6) determines the distance between the front end of the workpiece (2) and the measuring device (6).

5. A trimming plant according to one or several of the preceding claims, **characterised in that** the measuring device (6) is designed as a laser-based measuring system (9).

6. A trimming plant according to one or several of the preceding claims, **characterised in that** the measuring device (6) is arranged between the supporting path (43) and the feeding path (44) and one workpiece (2) is held in position after the measuring device (6) prior to processing by the processing machine (3).

7. A trimming plant according to one or several of the preceding claims, **characterised in that** the conveyor (45) feeds the workpiece (2) towards the longitudinal stop (16) until the workpiece (2) is positioned so as to be parallel to the longitudinal stop (16).

8. A trimming plant according to one or several of the preceding claims, **characterised in that** the measuring device (6) has a measuring gripper (8) for determining the sectional dimensions of the workpiece (2), said measuring gripper (8) both clamping the workpiece (2) and determining the dimensions of the workpiece.

9. A trimming plant according to one or several of the preceding claims, **characterised in that** the conveyor (45) is put into reverse as long as the workpiece (2) is being clamped by the measuring gripper (8).

10. A trimming plant according to one or several of the preceding claims, **characterised in that** a sensor system (67) arranged in the approach unit (4) serves as a measuring device (6) and cooperates with the conveyor (45) to determine one dimension of the workpiece (2).

## Revendications

1. Ensemble de machines d'usinage destiné au façonnage de pièces à usiner (2), en particulier de bois équarris ou de pièces similaires, la machine comportant au moins une machine d'usinage (3) avec une zone d'entrée (4) en amont du dispositif transporteur (10) de la pièce à usiner (2) et une commande (5) contrôlant l'usinage de celle-ci avec au moins un dispositif de mesure (6) déterminant une dimension de la pièce à usiner dans la zone d'entrée (4), caractérisé en ce que la zone d'entrée (4) consiste en un transporteur d'approvisionnement (44) et en un transporteur de stockage (43), le transporteur d'approvisionnement (44) déplace la pièce à usiner (2) vers la machine d'usinage (3) et le transporteur (43) stocke les pièces à usiner (2), le dispositif de mesure (6) étant prévu à l'avant (41) du transporteur de stockage (43) et la commande de contrôle (5) enregistrant les informations des pièces à usiner déjà mesurées (2) choisit à travers ces informations les étapes d'usinage pour chacune des pièces à usiner (2).

2. Ensemble de machines d'usinage selon la revendication 1, caractérisé en ce que la pièce à usiner (2) repose contre un butoir (62) et en ce qu'un dispositif de mesure (6) détermine la longueur de cette pièce à usiner (2) par rapport au butoir (62).

3. Ensemble de machines d'usinage selon l'une ou les deux revendications précédentes, caractérisé en ce que deux appareils (61, 63) de mesure de distance fonctionnent comme dispositif de mesure et que ces deux appareils (61, 63) mesurent la longueur de la pièce à usiner (2).

4. Ensemble de machines d'usinage selon l'une ou plusieurs des revendications précédentes, caractérisé en ce que la pièce à usiner (2) repose contre une équerre (16) et en ce que le dispositif de mesure (6) détermine la distance entre la face avant de la pièce à usiner (2) et le dispositif de mesure (6).

5. Ensemble de machines d'usinage selon l'une ou plusieurs des revendications précédentes, caractérisé en ce que le dispositif de mesure (6) est un dispositif de mesure utilisant un faisceau laser (9).

6. Ensemble de machines d'usinage selon l'une ou plusieurs des revendications précédentes, caractérisé en ce que le dispositif de mesure (6) est situé entre le transporteur de stockage (43) et le transporteur d'approvisionnement (44) et en ce qu'une pièce à usiner (2) est tenue en arrière du dispositif de mesure (6) préalablement à l'usinage par la machine d'usinage (3).

7. Ensemble de machines d'usinage selon l'une ou plusieurs des revendications précédentes, caractérisé en ce que le dispositif transporteur (45) conduit la pièce à usiner (2) contre l'équerre (16) jusqu'à ce que la pièce à usiner (2) soit orientée parallèlement à l'équerre (16).

8. Ensemble de machines d'usinage selon l'une ou plusieurs des revendications précédentes, caractérisé en ce que le dispositif de mesure (6) possède un mécanisme de saisie et de mesure (8) pour déterminer une dimension de la section de la pièce à usiner (2) en la saisissant et en la mesurant à la fois.

9. Ensemble de machines d'usinage selon l'une ou plusieurs des revendications précédentes, caractérisé en ce que le sens du mouvement du dispositif transporteur (45) est inversé pendant que le mécanisme de saisie et de mesure (8) maintient la pièce à usiner (2).

10. Ensemble de machines d'usinage selon l'une ou plusieurs des revendications précédentes, caractérisé en ce qu'un système à capteurs (67) est prévu dans la zone d'entrée (4) déterminant une dimension de la pièce à usiner (2) en action combinée avec le dispositif transporteur (45).
